(19) Europäisches Patentamt
European Patent Office
Office européen des brevets

(11) **EP 3 068 825 B1**

(12) **EUROPÄISCHE PATENTSCHRIFT**

(45) Veröffentlichungstag und Bekanntmachung des Hinweises auf die Patenterteilung:
**10.06.2020 Patentblatt 2020/24**

(21) Anmeldenummer: **14798906.5**

(22) Anmeldetag: **17.11.2014**

(51) Int Cl.:
*C08J 9/28* (2006.01)          *C08J 9/00* (2006.01)
*C08J 9/12* (2006.01)          *C08J 9/14* (2006.01)
*C08J 9/18* (2006.01)          *C08J 9/34* (2006.01)

(86) Internationale Anmeldenummer:
**PCT/EP2014/074789**

(87) Internationale Veröffentlichungsnummer:
**WO 2015/071463 (21.05.2015 Gazette 2015/20)**

(54) **HERSTELLUNG VON PORÖSEN MATERIALIEN DURCH EXPANSION VON POLYMERGELEN**

PRODUCTION OF POROUS MATERIALS BY THE EXPANSION OF POLYMER GELS

PRÉPARATION DE MATÉRIAUX POREUX PAR EXPANSION DE GELS POLYMÈRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2013 DE 102013223391**

(43) Veröffentlichungstag der Anmeldung:
**21.09.2016 Patentblatt 2016/38**

(73) Patentinhaber: **SUMTEQ GmbH**
**50939 Köln (DE)**

(72) Erfinder:
• **STREY, Reinhard**
**41540 Dormagen (DE)**
• **OBERHOFFER, Roland**
**50935 Köln (DE)**
• **MÜLLER, Alexander**
**Köln 50672 (DE)**

(74) Vertreter: **Freischem & Partner Patentanwälte mbB**
**Salierring 47-53**
**50677 Köln (DE)**

(56) Entgegenhaltungen:
EP-A1- 0 750 006      EP-A2- 0 258 669
WO-A1-00/50159        WO-A1-2009/009252

• B. KRAUSE ET AL: "Bicontinuous Nanoporous Polymers by Carbon Dioxide Foaming", MACROMOLECULES, Bd. 34, Nr. 25, 7. November 2001 (2001-11-07), Seiten 8792-8801, XP002431175, in der Anmeldung erwähnt
• B. KRAUSE ET AL: "Open Nanoporous Morphologies from Polymeric Blends by Carbon Dioxide Foaming", MACROMOLECULES, Bd. 35, Nr. 5, 19. Januar 2002 (2002-01-19), Seiten 1738-1745, XP055145497, in der Anmeldung erwähnt
• DATABASE WPI Week 198046 Thomson Scientific, London, GB; AN 1980-81697C XP002735494, & JP S55 127443 A (SEKISUI PLASTICS CO LTD) 2. Oktober 1980 (1980-10-02)

**Beschreibung**

Die Erfindung betrifft ein Verfahren für die Herstellung von porösen Materialien durch Expansion von Polymergelen und die durch ein solches Verfahren hergestellten porösen Materialien und einen Formkörper.

Hintergrund der Erfindung

Die Darstellung von nanoporösen Materialien ist ein hochrangiges Ziel gegenwärtiger Forschung. Ziel ist es, ein Verfahren zu entwickeln, welches einerseits einen kostengünstigen und unkomplizierten Zugang zu solchen Materialien ermöglicht und andererseits die Möglichkeit beinhaltet, ein solches Verfahren großtechnisch umzusetzen.

Es existieren einige Methoden nanoporöse Materialien herzustellen, die aber bisher aufgrund von aufwändiger Herstellung und kostspieligem Einsatz von Materialien und Maschinen nicht in größerem Maßstab umgesetzt werden. So konnte beispielsweise nach *Kistler,* mittels Sol-Gel Prozess, Silicium basierte Aerogele synthetisiert werden, deren offenporige Strukturen zwischen 1 und 30 nm liegen. Dieser anfangs sehr einfache Sol-Gel Prozess wird aufgrund einer anschließenden überkritischen Trocknung zu einem komplizierten und aufwendigen Unterfangen. Hierbei muss aus einem erzeugten Silica-Gel das Lösungsmittel durch überkritische Trocknung vorsichtig extrahiert werden, ohne dass die extrem feine Nanostruktur beschädigt wird (S.S. Kistler. Nature, 127:1 (1931)).

Basierend auf der Idee von *Colten* und *Suh,* Polymere mit Treibmittel zu sättigen und anschließend über deren Glastemperatur zu expandieren, konnten *Krause et al.* Polyetherimide und Polyethersulfone mit überkritischen $CO_2$ versetzen und auf diese Weise nanoporöse Materialien herstellen, die sie Polymer-Nanoschäume (polymer nanofoams) nannten (J. S. Colton; N. P. Suh. Polymer Engineering and Science, 27:485-492 (1987); J. S. Colton; N. P. Suh. Polymer Engineering and Science, 27:493-499 (1987); J. S. Colton; N. P. Suh. Polymer Engineering and Science, 27:500-503 (1987); D. F. Baldwin et al. Polymer Engineering and Science, 36:1437-1445 (1996); D. F. Baldwin et al. Polymer Engineering and Science, 36:1446-1453 (1996)). Die Durchführung beinhaltet hierbei eine stundenlange Sättigung eines wenige Millimeter dicken Polymerfilms bei Drücken von ca. 50 bar und Temperaturen von 100 - 250 °C (B. Krause et al. Macromolecules, 35:1738-1745 (2002); B. Krause et al. Macromolecules, 34:8792-8801 (2001) ; WO 00 / 50151 A1).

*Merlet et al.* entwickelten selbstschäumende Polymersysteme und erreichte Porendurchmesser im Bereich von 10 bis 700 nm. Mit Hilfe des Polymers Poly-Phenylquinoxalin, welches thermolabile tert-Butyloxycarbonyl-Gruppen enthält, konnte sie durch Temperaturerhöhung $CO_2$ und Isobuten im Polymer freisetzen und somit ein nanoporöses Material erhalten (S. Merlet et al.

Macromolecules, 41:4205-4215 (2008)).

EP 0 258 669 A2 beschreibt vorexpandierte Pellets aus Polyvinylchlorid.

EP 0 750 006 A1 beschreibt ein Verfahren zu Herstellung eines aufschäumbaren Films.

JP S55 127443 A beschreibt aufschäumbare Harzpartikel aus Polystyrol.

JP S58 67423 A beschreibt die Herstellung eines Polycarbonatschaums.

CN 1318580 beschreibt die Herstellung eines Polymerschaums.

In US 7,838,108 B2 werden bereits nanozellulare Polymerschäume beansprucht. In diesem Patent wird ein Verfahren beschrieben, um das geschützte Material herstellen zu können, was auf einem typischen Lösungsprozess eines Treibmittels in einem Polymer beruht. Dieser Prozess ist wie in den vorrangegangenen Literaturstellen bereits beschrieben worden und mit sehr hohen Drücken, Temperaturen und enorm langen Verweildauern des Polymers im Treibmittel verbunden. Somit ist auch dieses Verfahren unwirtschaftlich und nur auf kleine Probendicken sinnvoll anwendbar. Desweiteren wird das geschützte Polymermaterial im 1. Anspruch von US 7,838,108 B2 mit einer Wärmeleitfähigkeit von 1 bis 10 mW/(m·K) angegeben und liegt somit in einem Bereich, der bis heute nur durch eine Evakuierung von porösen Materialien möglich ist (Vakuum-Isolations-Paneelen).

In EP 2 185 620 B1 wird ein Verfahren zur Darstellung von mikro- und nanoporösen Xerogelen auf Basis von Polyharnstoff beschrieben. Im Allgemeinen wird für die Herstellung eines Xerogels oder auch Aerogels ausgehend von einem Sol ein Gel gebildet, welches aus einem Feststoff und einem Lösungsmittel besteht. Durch den Austausch des Lösungsmittels durch ein Gas (beispielsweise Luft) wird aus dem Gel ein poröses Material. Hierbei ist zu beachten, dass bereits der Gelkörper das maximale Volumen darstellt, welcher nach der Trocknung des porösen Materials erhalten werden kann. Die zu erwartende Dichte des porösen Materials ist somit nur abhängig vom Verhältnis an Feststoff zu Lösungsmittel. Es findet somit keine Volumenzunahme durch ein expandierendes Treibmittel statt im Sinne eines Schäumprozesses. Neben den von *Kistler* beschriebenen anorganischen Aerogelen auf Silica-Basis ist in dem aufgeführten Patent ein Verfahren beschrieben, mit dem auch organische Aerogele/Xerogele zugänglich sind.

In EP 1 646 687 B1 ist die Herstellung von nano- oder mikroporösen syndiotaktischem Polystyrol beschrieben. Hierbei wird ein Gel aus einem geeigneten Lösungsmittel und syndiotaktischem Polystyrol hergestellt und im Anschluss dieses durch über- oder nahekritische Trocknung mit $CO_2$ zu einem porösen syndiotaktischem Polystyrolmaterial weiterverarbeitet. Wie in diesem Patent beschrieben wird, wird das Lösungsmittel während der über-/nahekritischen Trocknung fast vollständig entfernt (Restlösungsmittelgehalt <1wt%(Gewichtsprozent)) und die Expansion auf Normaldruck über 60 bis 120 Minuten durchgeführt. In den Beispielen des Patents wird beschrieben, dass das Polymermaterial nach der Trocknung dieselbe Form und Dimensionen vorweist wie das ursprüngliche Gel. Somit handelt es sich auch bei diesem Verfahren nicht um eine Volumenvergrößerung im Sinne einer Expansion eines Treibmittels um ein poröses Polymermaterial zu erzeugen, sondern um einen Austausch von Lösungsmittel durch ein Gas (Luft). Das Verhältnis an Polymer zu Lösungsmittel im Ausgangsgel ist maßgeblich verantwortlich für die resultierende Dichte des getrockneten, porösen Polymermaterials. Deswegen wird beim Herstellungsprozess des Gels bereits darauf geachtet, dass der Anteil an Polymer im Verhältnis zum Lösungsmittel möglichst klein ist (1-50 wt%), um im Zielmaterial eine möglichst geringe Dichte zu erhalten.

Alle genannten Methoden sind entweder sehr zeitaufwändig oder kostenträchtig.

Es besteht daher ein grundlegendes Interesse, die bisher existierenden Verfahren zur Herstellung von Polymerschäumen zu vereinfachen und somit auch die erhaltenen Polymerschäume zu verbessern, wodurch auch niedrigere Produktionskosten entstehen und neue Anwendungsgebiete erschlossen werden können.

Kurzbeschreibung der Erfindung

Es wurde nunmehr ein verbessertes Verfahren zur Herstellung von Polymer-Nanoschäumen gefunden, das vorzugsweise als "Nano-Foam by Gel-Acetone Foam Formation via Expansion Locking" (NF-GAFFEL) bezeichnet wird. Im Gegensatz zu den bisher existierenden Möglichkeiten kommt NF-GAFFEL vorzugsweise ohne den Einsatz von kostspieligen Chemikalien und unwirtschaftlichen Prozessparametern aus. Das Grundprinzip basiert auf der Herstellung eines Polymergels, welches mittels Weichmacher (beispielsweise Gelbildner) aus einem Polymer erhalten wird.

Weichmacher im Sinne der Erfindung sind vorzugsweise Flüssigkeiten (bei Normalbedingungen), die dafür sorgen, dass das Polymer in ein Gel oder gelartigen Zustand überführt wird. Sie überführen das Polymer also in einem weichen Zustand und können beispielsweise auch als Gelbildner bezeichnet werden.

Hierbei werden beispielsweise die Zwischenräume der Polymerketten mit dem Weichmacher aufgequollen und vorzugsweise auf nanoskopischer Ebene eine Art bikontinuierliche Struktur bestehend aus Polymersträngen und Weichmacher gebildet. Das aufgequollene Gel wird im nächsten Schritt mit einem Treibmittel wie beispielsweise $CO_2$ unter hohem Druck kontaktiert und vorzugsweise temperiert. Vorzugsweise werden bei der Beaufschlagung mit dem Treibmittel die Parameter Druck und Temperatur so gewählt, dass der Weichmacher (beispielsweise Aceton) und das Treibmittel (beispielsweise $scCO_2$ also superkritisches $CO_2$) vollkommen gemischt vorliegen. So kann das Treibmittel nämlich spontan ohne Barriere in das aufgequollene Polymer eindringen, weil sich aus thermodynamischen Gründen eine homogene Mischung aus Weichmacher und Treibmittel bildet. Vorzugsweise kann durch anschließende, schnelle Drucksenkung der Weichmacher aus dem Polymergel extrahiert werden, wodurch der Glaspunkt des Polymers drastisch ansteigt. So kann das Polymer in Form eines nanoporösen Materials erstarren, unterstützt durch die abkühlende Wirkung des adiabatisch expandierenden Gases.

Die Erfindung betrifft somit

(1) ein Verfahren zur Herstellung von mikro- und nanoporösem Polymermaterial, wobei

(a) bei vorgegebener Temperatur das polymere Ausgangsmaterial mit einem Weichmacher gequollen wird, wobei es in einen viskoelastischen, deformierbaren Zustand übergeht,
(b) anschließend das gequollene Polymer mit einem Treibmittel unter hohem Druck kontaktiert wird, und
c) der Druck abgesenkt wird, wobei sich das mikro- und nanoporöse Polymermaterial verfestigt,

wobei das mikro- und nanoporöse Polymermaterial eine mittlere Porengröße in einem Bereich von 0,01 bis 10 $\mu$m und eine Dichte in einem Bereich von 10 bis 300 kg/m$^3$ aufweist, und wobei der arithmetische Mittelwert der Dicke der Stege zwischen den Poren in einem Bereich von 5 bis 50 nm liegt - bestimmt wie beschrieben in Beispiel 6, wobei die Parameter Druck und Temperatur über der binären Mischungslücke des Weichmachers und des Treibmittels gewählt werden, und wobei das poröse Material durch Expansion von Polymergelen hergestellt wird, wobei das entweichende Treibmittel den Weichmacher extrahiert.

(2) ein Mikro- oder nanoporöses Polymermaterial, wobei das mikro- oder nanoporöse Polymermaterial eine mittlere Porengröße in einem Bereich von 0,01 bis 10 $\mu$m und eine Dichte in einem Bereich von 10 bis 300 kg/m$^3$ aufweist, und wobei der arithmetische Mittelwert der Dicke der Stege zwischen den Poren in einem Bereich von 5 bis 50 nm liegt - bestimmt wie beschrieben in Beispiel 6,

wobei das Polymermaterial nach dem erfindungsgemäßen Verfahren hergestellt werden kann.

Schritt (b) findet vorzugsweise zeitlich immer nach Schritt (a) statt.

In Schritt (b) bildet das gequollene Polymer vorzugsweise einen makroskopisch zusammenhängenden Körper, der anschließend mit einem Treibmittel unter hohem Druck kontaktiert wird.

In Schritt (b) mischen sich vorzugsweise Weichmacher und Treibmittel erfindungsgemäß in den nanometergroßen Zwischenräumen der Polymerstränge.

Einige bevorzugte Ausführungsformen der Erfindung sind in den jeweiligen Unteransprüchen angegeben.

Aufgrund der Nanostruktur des Schaumes können Eigenschaften wie geringe Wärmeleitung, hohe Stabilität und optische Transparenz erreicht werden. Diese Schäume können als Dämmmaterialien, als optisch transparente Folien mit Dämmeigenschaften, als Nanofilter, zur Schallabsorption, für optisch aktive Bauteile mit großer Oberfläche etc. verwendet werden. Wichtigster Gesichtspunkt für die Produktion solcher Materialien nach NF-GAFFEL ist die Umsetzbarkeit auf einen kontinuierlichen und großtechnischen Prozess. Die Polymergele können beispielsweise problemlos extrudiert werden und das Treibmittel erreicht beispielsweise aufgrund von typischen Extrusionsdrücken und Temperaturen auch die benötigten Eigenschaften, die für eine erfolgreiche Umsetzung von NF-GAFFEL nötig sein können. Durch Anwendung von NF-GAFFEL lassen sich beispielsweise problemlos Polymer-Nanoschäume herstellen, wie beispielsweise Polymer-Nanoschäume aus PMMA, PS und PVC. Vorzugsweise handelt es sich bei dem Polymer um ein Copolymer, das insbesondere zumindest teilweise vernetzt ist. Da der Prozess die Bildung eines Polymergels beinhaltet, welches vorzugsweise von einem festen Polymer und einem Weichmacher ausgeht, können verschiedene Polymere nach diesem Verfahren geschäumt werden. Die entscheidenden Voraussetzungen in einer bevorzugten Ausführungsform für eine erfolgreiche Umsetzung des erfindungsgemäßen Verfahrens ist die richtige Wahl des Weichmachers für die Herstellung des Polymergels und zusätzlich dazu die Voraussetzung der vollständigen Mischbarkeit zwischen Weichmacher und Treibmittel unter hohem Druck.

In Arbeiten von *Colten, Suh* und *Krause* (Stand der Technik) wird das Polymer direkt mit dem Treibmittel unter hohem Druck gesättigt, was ein sehr langsamer Prozess ist. Durch das Vorlegen eines Polymergels, das vorzugsweise bei Atmosphärendruck mit Weichmacher gesättigt werden kann und das dann erst mit Treibmittel versetzt wird, werden lange Sättigungszeiten vermieden, denn der Diffusionsprozess des Treibmittels in das Polymergel ist überraschenderweise sehr schnell. Das neue Verfahren umfasst somit vorzugsweise drei erfindungsspezifische Schritte: 1. die neuartige Möglichkeit Polymere und Treibmittel schnell auf nanoskopischer Skala zu mischen und 2. zu einem nanoporösen Material zu expandieren, zudem 3. das Verfahren in einem kontinuierlichen Prozess durchzuführen.

Die Herstellung der Polymergele kann im Idealfall bei Raumtemperatur und Normaldruck durchgeführt werden und ist somit ein einfach umsetzbarer Prozess sowohl für kleine Proben wie auch für größere Mengen. Zudem kann die Gelherstellung durch Vergrößerung der Polymeroberfläche, durch Temperaturerhöhung und durch Konvektion beschleunigt werden. Für eine kontinuierliche Produktion der Nanoschäume nach dem erfindungsgemäßen Verfahren (NF-GAFFEL) können die Polymergele vorzugsweise unmittelbar vor dem eigentlichem Schäumprozess in Mischeinheiten oder durch Extrusion hergestellt und vorgelegt werden. Diese Voraussetzung gewährleistet somit eine Produktion der Nanoschäume, ausgehend von einem festen Polymer in einem kontinuierlichen Prozess.

Aufgrund des erfindungsgemäßen Vorlegens der Polymere in Form einer Gelstruktur ist eine homogene und zeiteffiziente Befüllung der Polymere mit einem unter Druck stehendem Treibmittel gewährleistet. Druck und Temperatur sind vorzugsweise so zu wählen, dass der Weichmacher und das Treibmittel eine einphasige Mischung bilden, was die Voraussetzung für den schnellen Diffusionsprozess des Treibmittels in die Polymergele ist. Das mit Treibmittel und Weichmacher durchzogene Gel wird durch Expansion zu einem nanozellularen Schaum. Hierbei extrahiert das entweichende Treibmittel den Weichmacher und sorgt einerseits für einen drastischen Anstieg des Glaspunktes des Polymers und andererseits für eine plötzliche Abkühlung, was die Gründe für eine spontane Fixierung der Polymermatrix sind.

Vorzugsweise ist das polymere Ausgangsmaterial in Schritt (a) des erfindungsgemäßen Verfahrens zumindest teilweise vernetzt. Vorzugsweise liegt der Gehalt an Vernetzer im erfindungsgemäßen polymeren Ausgangsmaterial Bereich von 0,01 bis 10 mol%, insbesondere bevorzugt 0,1 bis 1 mol%, bezogen auf das eingesetzte Monomer. Vorzugsweise wird im erfindungsgemäßen Verfahren in Schritt (a) die Quellung bei Umgebungsdruck, d.h. im Bereich von 0,8 bis 1,2 bar durchgeführt. Die Temperatur während der Quellung in Schritt (a) liegt vorzugsweise bei Umgebungstemperatur, d.h. in einem Bereich von 15 bis 30 °C. Aus prozesstechnischen Gründen kann es vorteilhaft sein, zwecks zeitlicher Beschleunigung des Quellungsprozesses Temperatur und Druck zu erhöhen. In einer weiteren Ausführungsform wird die der Erfindung zu Grunde liegende Aufgabe durch ein mikro- oder nanoporöses Polymermaterial gelöst, das vorzugsweise nach dem erfindungsgemäßen Verfahren hergestellt wird.

Die mittlere Porengröße (arithmetischer Mittelwert bei wenigstens 300 ausgezählten Poren) des erfindungsgemäßen mikro- oder nanoporösen Polymermaterials liegt in einem Bereich von 0,01 bis 10 $\mu$m, bevorzugt in einem Bereich von 0,05 bis 0,5 $\mu$m. Die mittlere Porengröße kann über elektronenmikroskopische Aufnahmen und Auszählung gemäß Beispiel 6 bestimmt werden.

Alternativ kann es auch bevorzugt sein, dass das Maximum der Porengrößenverteilung in einem Bereich von 0,01 bis 10 $\mu$m, besonders bevorzugt in einem Bereich von 0,05 bis 0,5 $\mu$m liegt. Die Porengrößenverteilung kann beispielsweise durch eine Poissonverteilung gegeben sein.

Vorzugsweise ist das erfindungsgemäße mikro- oder nanoporöse Polymermaterial nicht in dem eigenen Monomer löslich. Dies ist eine ganz wichtige bevorzugte Eigenschaft des Materials. Dadurch ist klar, dass die Polymerstränge (also Polymerketten, aus denen das erfindungsgemäße Polymermaterial besteht) untereinander bevorzugt nicht nur durch physikalische Kräfte gebunden sind, sondern kovalente chemische Bindungen existieren. Der Schaum wird daher vorzugsweise kovalent (und nicht nur physikalisch) zusammengehalten.

Das Polymermaterial und/oder das Ausgangsmaterial ist vorzugsweise teilvernetzt oder vernetzt.

Vorzugsweise liegt der Gehalt an Vernetzer im erfindungsgemäßen mikro- oder nanoporösen Polymermaterial in einem Bereich von 0,01 bis 10 mol%, bevorzugt in einem Bereich von 0,1 bis 1 mol%, besonders bevorzugt in einem Bereich von 0,2 bis 0,6 mol% bezogen auf die das Polymer ergebende Monomere. Das bedeutet, dass im Falle einer Vernetzerkonzentration von 0,01 mol% laut Statistik jedes 10000ste beziehungsweise für eine Vernetzerkonzentration von 10 mol% jedes 10te Molekül ein Vernetzermolekül ist. Die Vernetzermoleküle verbinden wiederum zwei Polymerstränge miteinander, was zur Folge hat, dass mit steigender Vernetzerkonzentration mehr kovalente Vernetzungspunkte zwischen den Polymersträngen bestehen. Eine chemische Charakterisierung des Polymers hinsichtlich Polymerisationsgrad beziehungsweise Molmassenverteilung ist aufgrund der Tatsache, dass das Polymer ohne Zersetzung nicht vollständig in Lösung gebracht werden kann nicht durchführbar. Hierzu kann aber der Quellungsgrad des teilvernetzen Polymers in einem geeigneten Lösungsmittel Aufschluss bringen. Je höher der Vernetzergehalt im Polymer ist, desto weniger Lösungsmittel kann das Gel aufnehmen. Umso mehr das Polymer mit dem Lösungsmittel wechselwirkt, desto signifikanter werden beispielsweise die Unterschiede des Quellungsgrades in Abhängigkeit der Vernetzerkonzentration. Somit können beispielsweise bei teilvernetztem Polystyrol mit Benzol, Toluol oder Styrol als Lösungsmittel bereits kleine Unterschiede der Vernetzerkonzentration durch den resultierenden Quellungsgrad bestimmt werden. Der Vernetzer hat zwei oder mehrere zur Polymerisation fähige funktionelle Gruppen und kann beispielsweise für Polymethylmethacrylat (PMMA) oder Polystyrol (PS) vorzugsweise Divinylbenzol (DVB), Ethylenglycoldimethacrylat (EGDMA) oder Methylenbisacrylamid (MBAA) sein. Bislang gab es das Vorurteil, dass man aus (teil-)vernetzten Polymeren keinen Schaum herstellt. Ein Grund könnte sein, dass teilvernetzte Polymere (Copolymere) nicht zwingend wie thermoplastische Polymere geschmolzen werden können und somit nicht in einer standardmäßigen Verarbeitung für Schaumstoffe integrierbar sind. Die Erfinder haben nun überraschend herausgefunden, dass die erfindungsgemäßen Schäume besonders gut mit (teil-)vernetzten Ausgangsmaterialien hergestellt werden können.

Der nach dem beschriebenen Verfahren erzeugte nanoporöse Polymerschaum ist durch folgende Eigenschaften charakterisiert:

Die mittlere Dicke (arithmetisches Mittel) der Stege zwischen den Poren liegt in einem Bereich von 5 bis 50 nm, bevorzugt in einem Bereich von 10 bis 35 nm. Die Dicke der Stege kann über elektronenmikroskopische Aufnahmen und über Auszählung gemäß Beispiel 6 bestimmt werden.

Vorzugsweise ist das erfindungsgemäße mikro- oder nanoporöse Polymermaterial teilweise geschlossenzellig. Besonders bevorzugt ist das erfindungsgemäße mikro- oder nanoporöse Polymermaterial teilweise offenzellig. Die Wärmeleitfähigkeit des erfindungsgemäßen mikro- oder nanoporösen Polymermaterials, das mit Luft bei Atmosphärendruck gefüllt ist, liegt vorzugsweise in einem Bereich von 1 bis 30 mW/(m·K), besonders bevorzugt in einem Bereich von 10 bis 26 mW/(m·K).

Die Dichte des erfindungsgemäßen mikro- oder nanoporösen Polymermaterials liegt in einem Bereich von 10 bis 300 $kg/m^3$, bevorzugt in einem Bereich von 30 bis 200 $kg/m^3$.

In einer weiteren Ausführungsform wird die der Erfindung zu Grunde liegenden Aufgaben durch einen Formkörper aus dem erfindungsgemäßen mikro- oder nanoporösen Material gelöst.

Der Formkörper ist vorzugsweise versiegelt. Dies heißt, dass die Poren des Formkörpers, die die Oberfläche des Formkörpers bilden, zur Oberfläche des Formkörpers hin geschlossen sind.

Vorzugsweise handelt es sich bei dem Formkörper um ein Polymerpartikel. Dieses Polymerpartikel kann Teil eines Polymergranulats sein.

Der Formkörper weist vorzugsweise eine Wärmeleitung oder Wärmeleitfähigkeit in einem Bereich von 1 bis 30 mW/(m·K) und besonders bevorzugt in einem Bereich von 10 bis 26 mW/(m·K) auf.

Durch die neuartige Nutzung von Polymerpartikel bzw. Polymergranulat anstelle von Polymerplatten können alle Prozessparameter wie Temperatur, Druck und Zeit aufgrund der deutlich größeren Oberfläche reduziert werden und sind weitestgehend unabhängig von eine Skalierung. So können leicht große Mengen des Materials produziert werden.

Die Dauer des Quellungsprozesses mit einem geeigneten Weichmacher wie beispielsweise Aceton für ein Copolymer wie beispielsweise Polystyrol/DVB (ursprünglich mehreren Stunden bis hinzu Tagen für eine Polymerplatte (0,5 x 5 x 5 $cm^3$)) liegt für die erfindungsgemäßen Polymerpartikel vorzugsweise in einem Bereich von 1 bis 60 Minuten.

Der Weichmacher für die Quellung ist vorzugsweise ausgewählt aus der Gruppe der Lösungsmittel, die aprotisch sind und/oder ein Dipolmoment von weniger als 1,84 Debye (in $\mu$) aufweisen.

Durch die Verwendung eines Polymergranulats anstelle von Polymerplatten-/Blöcken können alle Schäum-Prozessparameter im Hinblick eines wirtschaftlichen Prozesses optimiert werden.

Für den Fall, dass das Volumen des Autoklaven größer ist, als das Volumen des zu erwartenden Nanoschaums, werden beispielsweise diskrete nanoporöse Polymerpartikel nach der Expansion erhalten. Für den Fall, dass das Autoklavenvolumen kleiner, als das Volumen des zu erwartenden Nanoschaums ist, dann werden die Polymerpartikel durch die Expansion aneinander gedrückt und bilden beispielsweise einen zusammenhängenden Schaumkörper (Partikelschaumkörper).

Die Polymerpartikel können sowohl poly- als auch monodispers sein. Der mittlere Durchmesser (artihmetisches Mittel) liegt vorzugsweise in einem Bereich von 0,2 bis 2 mm. Der Durchmesser kann leicht optisch im Lichtmikroskop bestimmt werden.

Kurzbeschreibung der Figuren

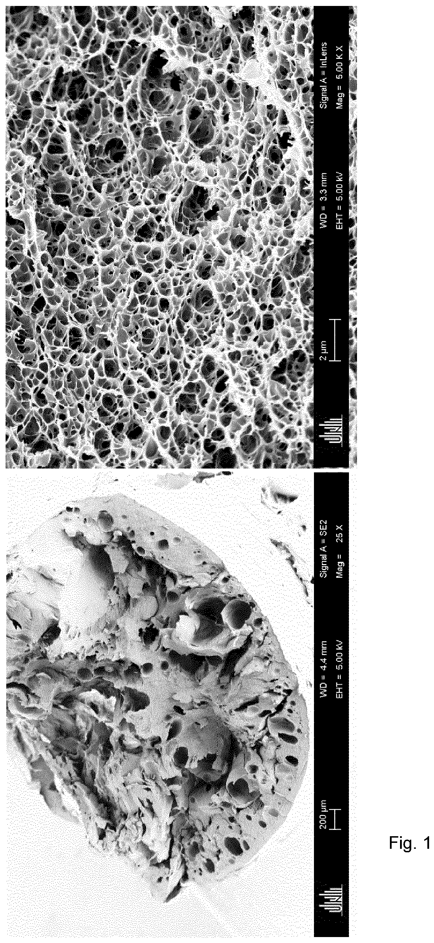

Fig. 1: Rasterelektronenmikroskopische Aufnahmen von geschäumtem Plexiglas, das käuflich erworben wurde, nach dem NF-GAFFEL Verfahren. Das Massenverhältnis von Plexiglas zu Aceton betrug 1:3. Die Probe wurde bei $p$ = 250 bar, $T$ = 55 °C, $t$ = 15 min einer $CO_2$ Atmosphäre ausgesetzt und im Anschluss expandiert ($t_{exp} \approx 1$ s). Die Schaumdichte liegt bei $0{,}35 \pm 0{,}05$ g/cm$^3$.

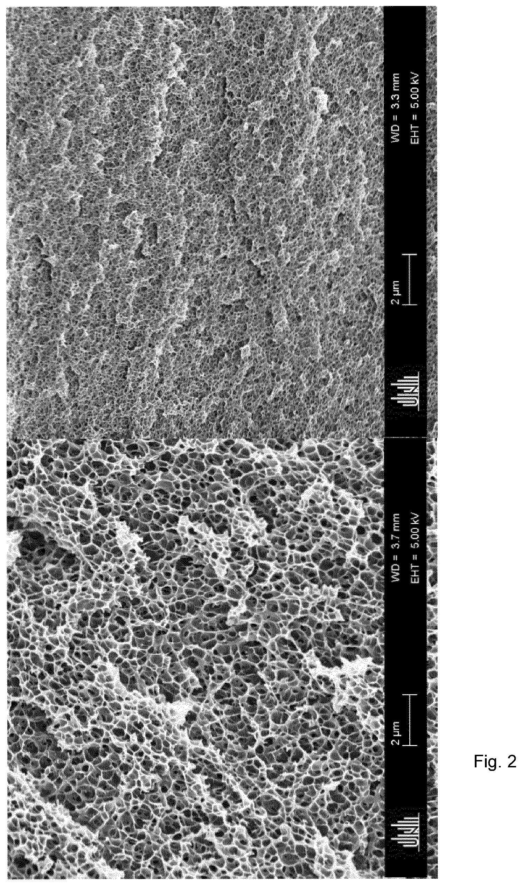

Fig. 2: Rasterelektronenmikroskopische Aufnahmen von geschäumtem PMMA nach dem NF-GAFFEL Verfahren. Das PMMA-Gel war mit Aceton gesättigt. Die Proben wurden bei $p$ = 250 bar, $T$ = 55 °C, $t$ = 15 min einer $CO_2$ Atmosphäre ausgesetzt und im Anschluss expandiert ($t_{exp} \approx 1$ s). Die Vernetzerkonzentration (MBAA) im linken Schaum betrug $v$ = 0,2 mol% und im rechten Schaum $v$ = 0,7 mol%. Die Schaumdichten liegen bei einem Wert von $0{,}35 \pm 0{,}05$ g/cm$^3$ (links) und $0{,}40 \pm 0{,}05$ g/cm$^3$ (rechts).

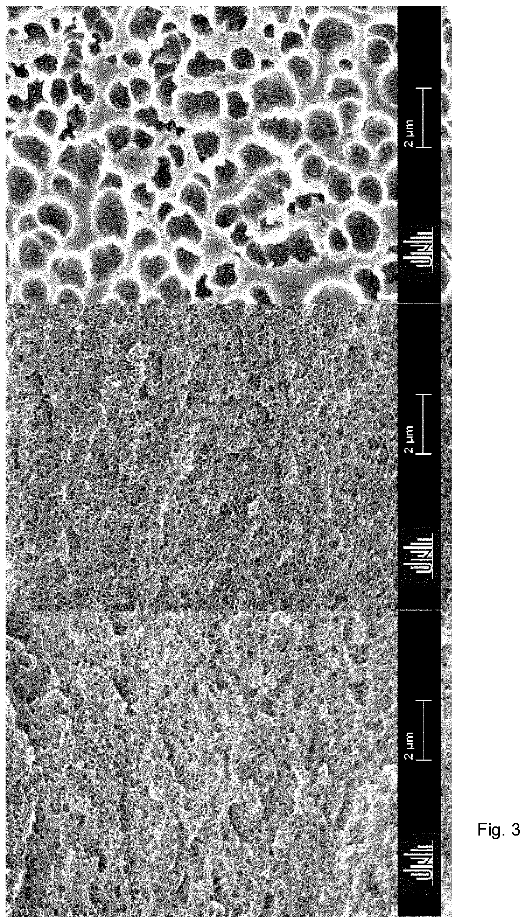

Fig. 3: Rasterelektronenmikroskopische Aufnahmen von geschäumtem PMMA nach dem NF-GAFFEL Verfahren. Das PMMA-Gel war mit Aceton gesättigt. Die Proben wurden bei $p$ = 250 bar, $t$ = 15 min einer $CO_2$ Atmosphäre ausgesetzt und im Anschluss expandiert ($t_{exp} \approx 1$ s). Die Vernetzerkonzentration (MBAA) betrug in allen Schäumen $v$ = 0,7 mol%. Die linke Probe wurde bei einer Temperatur von $T$ = 35 °C geschäumt, die mittlere Probe bei $T$ = 55 °C und die rechte Probe bei $T$ = 75 °C. Die Schaumdichten liegen bei einem Wert von $0{,}40 \pm 0{,}05$ g/cm$^3$ (links), $0{,}40 \pm 0{,}05$ g/cm$^3$ (mitte) und $0{,}40 \pm 0{,}05$ g/cm$^3$ (rechts).

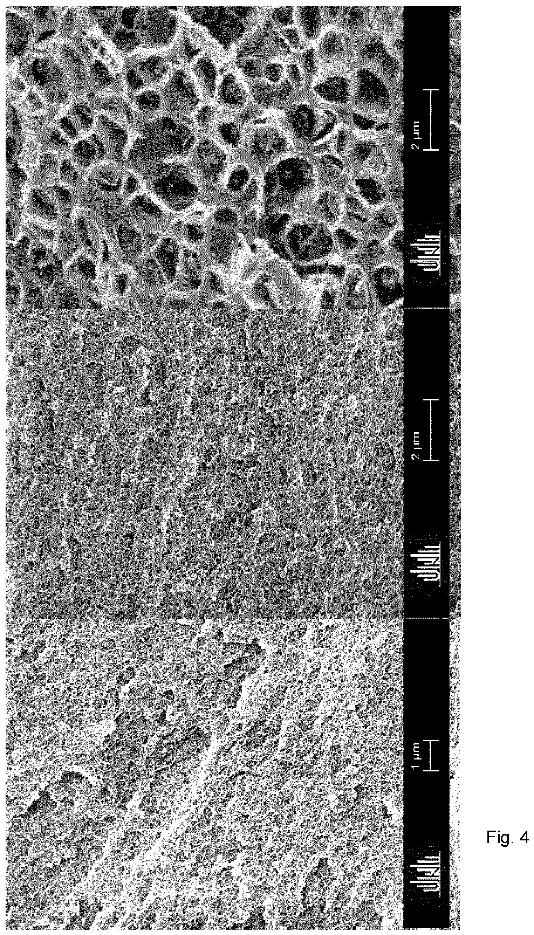

Fig. 4: Rasterelektronenmikroskopische Aufnahmen von geschäumtem PMMA nach dem NF-GAFFEL Verfahren. Das PMMA-Gel war mit Aceton gesättigt. Die Proben wurden bei $p$ = 250 bar, bei $T$ = 55 °C einer $CO_2$ Atmosphäre ausgesetzt und im Anschluss expandiert ($t_{exp} \approx 1$ s). Die Vernetzerkonzentration (MBAA) betrug in allen Schäumen $v$ = 0,7 mol%. Die linke Probe wurde nach $t$ = 5 min geschäumt, die mittlere Probe nach $t$ = 15 min und die Rechte nach $t$ = 60 min expandiert. Die Schaumdichten liegen bei einem Wert von $0{,}45 \pm 0{,}05$ g/cm$^3$ (links), $0{,}40 \pm 0{,}05$ g/cm$^3$ (mitte) und $0{,}40 \pm 0{,}05$ g/cm$^3$ (rechts).

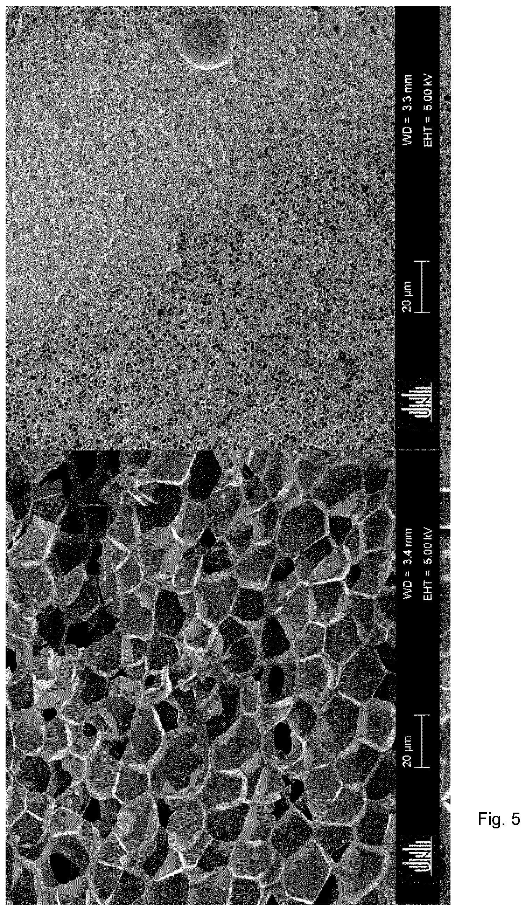

Fig. 5: Rasterelektronenmikroskopische Aufnahmen von geschäumtem PMMA nach dem NF-GAFFEL Verfahren. Das PMMA-Gel war mit Aceton gesättigt. Die Proben wurden bei $p$ = 250 bar, $T$ = 55 °C, $t$ = 15 min einer $CO_2$ Atmosphäre ausgesetzt und im Anschluss expandiert ($t_{exp} \approx 1$ s). Die Vernetzerkonzentration (MBAA) im linken Schaum betrug $v$ = 0,7 mol% und im rechten Schaum $v$ = 1,2 mol%. In beiden Proben waren $\rho$ = 0,5 mol% Regler (EHTG) vorhanden. Die Schaumdichten liegen bei einem Wert von $0{,}10 \pm 0{,}05$ g/cm$^3$ (links) und $0{,}25 \pm 0{,}05$ g/cm$^3$ (rechts).

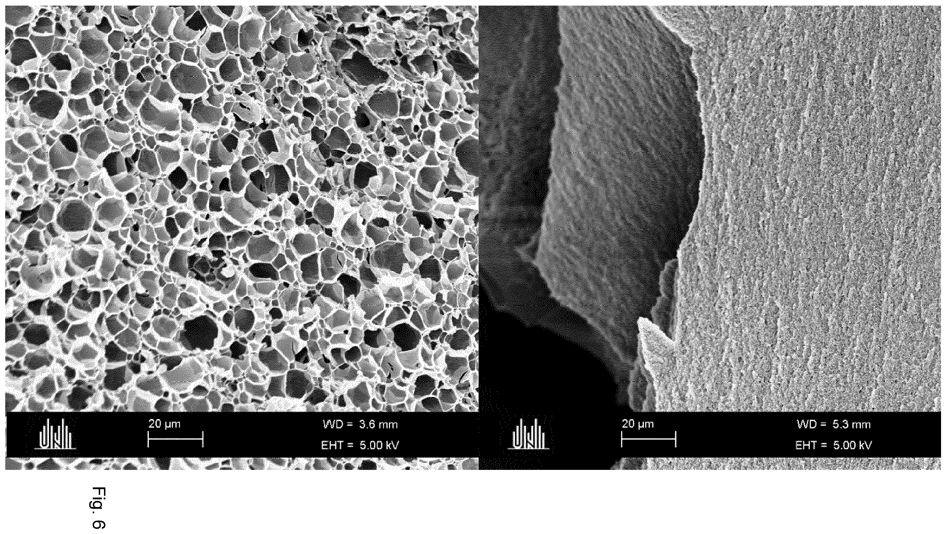

Fig. 6: Rasterelektronenmikroskopische Aufnahmen von geschäumtem PS nach dem NF-GAFFEL Verfahren. Das Massenverhältnis von PS zu Aceton betrug jeweils 1:1. Die Proben wurden bei $p$ = 250 bar, $T$ = 55 °C, $t$ = 15 min einer $CO_2$ Atmosphäre ausgesetzt und im Anschluss expandiert ($t_{exp} \approx 1$ s). Die Vernetzerkonzentration im linken Schaum betrug $v$ = 0,5 mol% und im rechten Schaum $v$ = 1,0 mol%. Die Schaumdichten liegen bei einem Wert von $0{,}10 \pm 0{,}05$ g/cm$^3$ (links) und $0{,}25 \pm 0{,}05$ g/cm$^3$ (rechts).

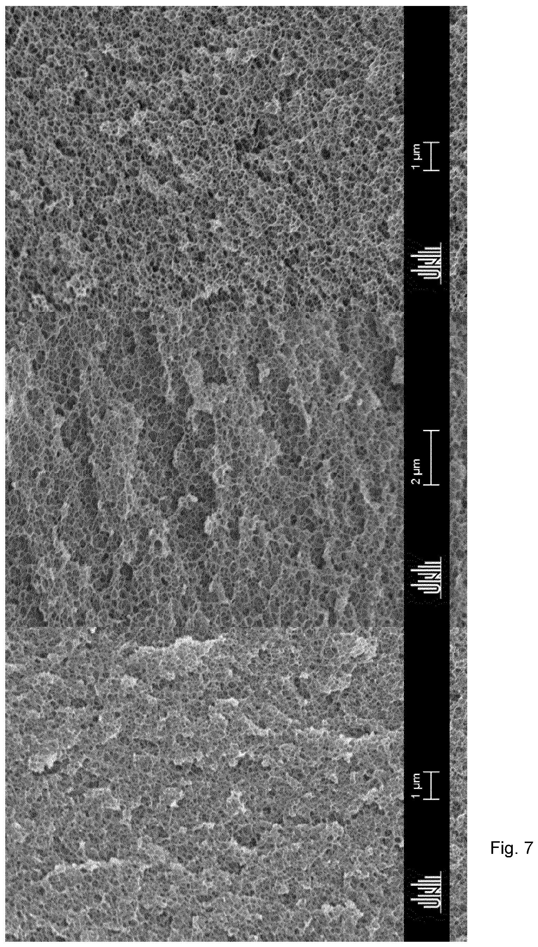

Fig. 7: Rasterelektronenmikroskopische Aufnahmen von geschäumtem PS nach dem NF-GAFFEL Verfahren. Das Massenverhältnis von PS zu Aceton betrug jeweils 1:1. Die Proben wurden bei $p$ = 250 bar, $t$ = 15 min einer $CO_2$ Atmosphäre ausgesetzt und im Anschluss expandiert ($t_{exp} \approx 1$ s). Die Vernetzerkonzentration (DVB) betrug in allen Schäumen $v$ = 1,0 mol%. Die linke Probe wurde bei einer Temperatur von 35 °C geschäumt, die mittlere Probe bei 65 °C und die rechte Probe bei 75 °C. Die Schaumdichten liegen bei einem Wert von $0{,}25 \pm 0{,}05$ g/cm$^3$ (links), $0{,}25 \pm 0{,}05$ g/cm$^3$ (mitte) und $0{,}20 \pm 0{,}05$ g/cm$^3$ (rechts).

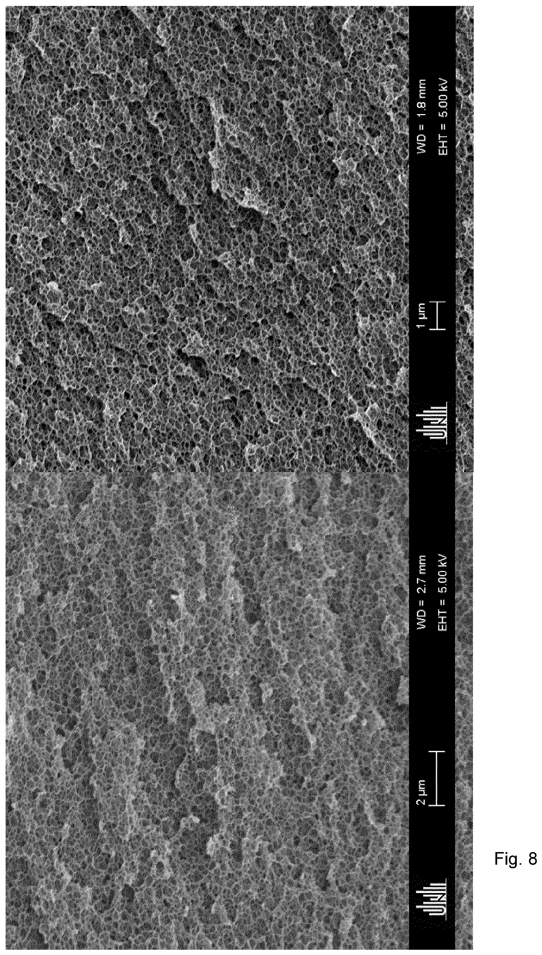

Fig. 8: Rasterelektronenmikroskopische Aufnahmen von geschäumtem PS nach dem NF-GAFFEL Verfahren. Das Massenverhältnis von PS zu Aceton betrug jeweils 1:1. Die Proben wurden bei $T$ = 65 °C, $t$ = 15 min einer $CO_2$ Atmosphäre ausgesetzt und im Anschluss expandiert ($t_{exp} \approx 1$ s). Die Vernetzerkonzentration (DVB) betrug in beiden Schäumen $v$ = 1,0 mol%. Die linke Probe wurde einem $CO_2$ Sättigungsdruck von $p$ = 250 bar ausgesetzt und die rechte Probe von $p$ = 150 bar. Die Schaumdichten liegen bei einem Wert von $0{,}25 \pm 0{,}05$ g/cm$^3$ (links) und $0{,}25 \pm 0{,}05$ g/cm$^3$ (rechts).

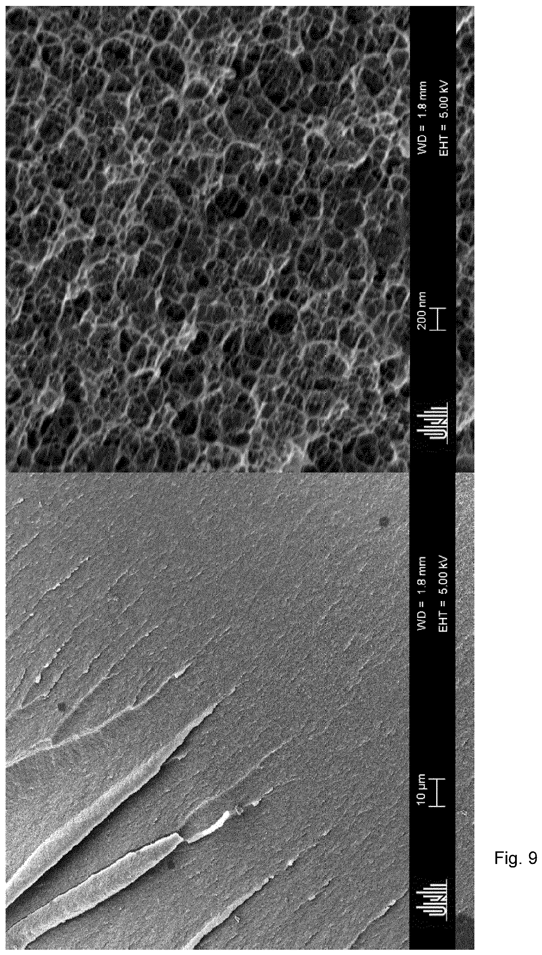

Fig. 9: Rasterelektronenmikroskopische Aufnahmen von geschäumtem PS nach dem NF-GAFFEL Verfahren. Das Massenverhältnis von PS zu Aceton betrug 1:1. Die Probe wurden bei $p$ = 250 bar, $T$ = 60 °C und $t$ = 15 min einer $CO_2$ Atmosphäre ausgesetzt und im Anschluss expandiert ($t_{exp} \approx$ 20 s). Die Vernetzerkonzentration (DVB) betrug $v$ = 2,0 mol%. Die Schaumdichte liegt bei 0,15±0,05 g/cm$^3$

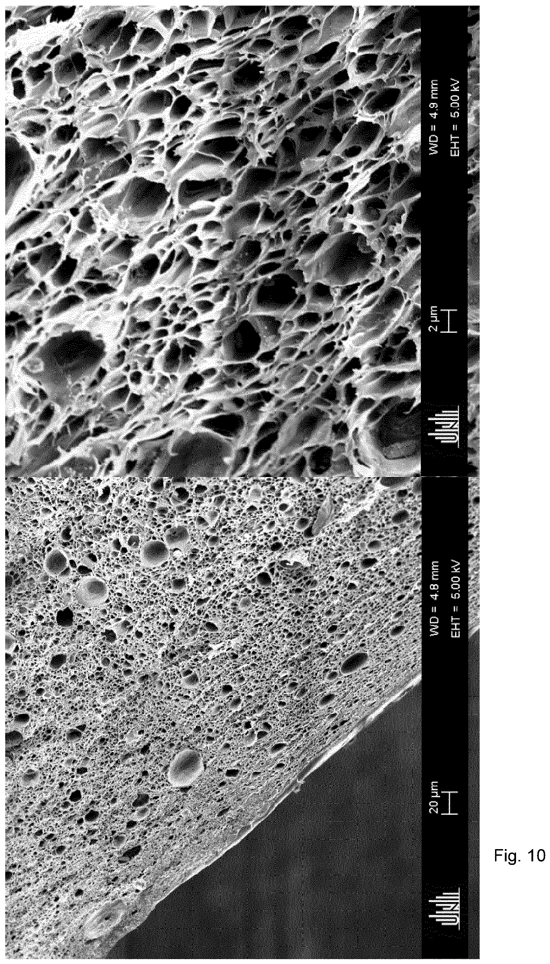

Fig. 10: Rasterelektronenmikroskopische Aufnahmen von geschäumtem PVC nach dem NF-GAFFEL Verfahren. Die mit Aceton gesättigte Probe wurde bei $p$ = 250 bar, $T$ = 70 °C, $t$ = 10 min einer $CO_2$ Atmosphäre ausgesetzt und im Anschluss expandiert ($t_{exp} \approx$ 1 s). Die Schaumdichte liegt bei 0,20±0,05 g/cm$^3$.

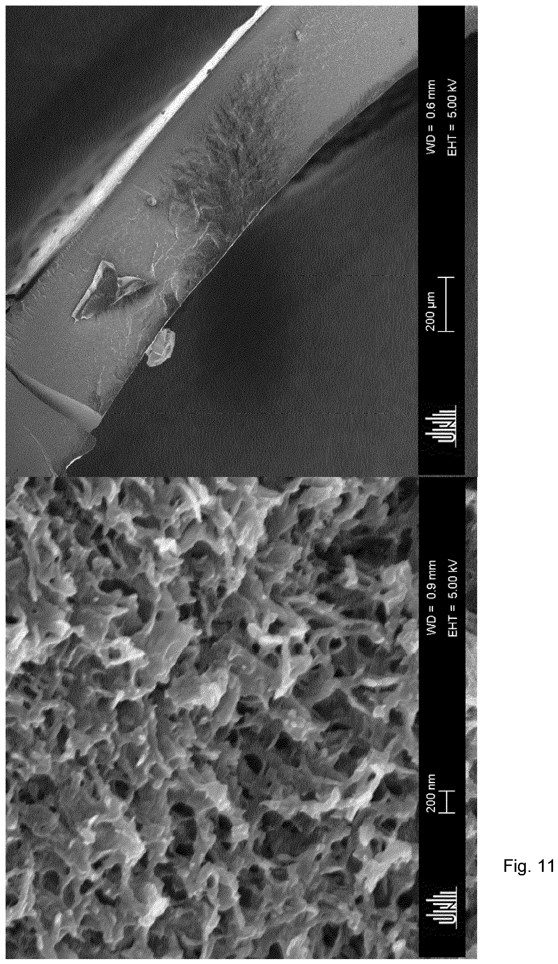

Fig. 11: Rasterelektronenmikroskopische Aufnahmen von geschäumtem PE nach dem NF-GAFFEL Verfahren. Die mit Cyclohexan gesättigte Probe wurde bei $p$ = 250 bar, $T$ = 70 °C, $t$ = 15 min einer $CO_2$ Atmosphäre ausgesetzt und im Anschluss expandiert ($t_{exp} \approx$ 1 s). Die Schaumdichte liegt bei 0,35±0,05 g/cm$^3$.

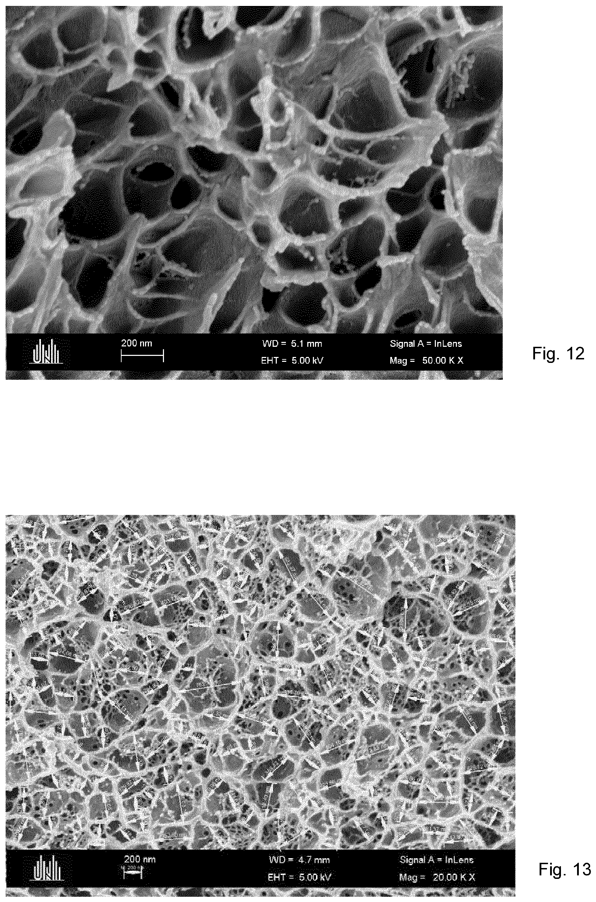

Fig. 12: Rasterelektronenmikroskopische Aufnahme der Nanostruktur des in Beispiel 6 aufgeführten Polystyrolmaterials.

Fig. 13: Rasterelektronenmikroskopische Aufnahme eines nanoporösen Polymermaterials in dem mit dem Computerprogramm Datinf Measure die Porendurchmesser bestimmt wurden.

Detaillierte Beschreibung der Erfindung

In dem erfindungsgemäßen Verfahren (NF-GAFFEL Verfahren) gemäß Aspekt (1) der Erfindung besteht das polymere Ausgangsmaterial aus einem oder mehreren Polymeren, vorzugsweise thermoplastischen Polymeren, alternativ bevorzugt vernetze Polymere, ganz besonders bevorzugt aus einem Copolymer der Gruppe Polymethylmethacrylat (PMMA/Vernetzer), Polystyrol (PS/Vernetzer), Polyvinylchlorid (PVC/Vernetzer), Polylactid (PL/Vernetzer), Polyethylen (PE/Vernetzer), Polypropylen (PP/Vernetzer), Polycarbonat (PC/Vernetzer) und Cellophan/Vernetzer. Der Weichmacher ist bevorzugt ausgewählt aus der Gruppe der Ketone (wie Aceton) und anderen damit polaren aprotischen Lösungsmitteln sowie kurzkettigen Alkanen wie beispielsweise Butan, Pentan, Hexan und Cyclohexan, jedoch besonders bevorzugt ist Aceton. Dabei liegt das Massenverhältnis von polymerem Ausgangsmaterial zu Weichmacher vorzugsweise in einem Bereich von 10:0,5 bis 1:3, besonders bevorzugt in einem Bereich von 10:2 bis 1:1. Die Zeit des Quellens liegt vorzugsweise in einem Bereich von 0,1 s bis 100 h, besonders bevorzugt in einem Bereich von 1 s bis 1 h.

Das Ausgangsmaterial enthält vorzugsweise 0,01 bis 10 mol.% Vernetzer. Der Vernetzer ist vorzugsweise Divinylbenzol (DVB), Ethylenglycoldimethacrylat (EGDMA) oder Methylenbisacrylamid (MBAA).

Die vorgegebene Temperatur in Schritt (a) und/oder (b) liegt unabhängig voneinander vorzugsweise in einem Bereich von 0 bis 100 °C und liegt besonders bevorzugt für Schritt (a) in einem Bereich von 15 bis 30 °C und unabhängig davon für Schritt (b) in einem Bereich von 30 bis 70 °C.

Weiterhin ist bevorzugt, dass durch das Quellen in Schritt (a) eine dichte Packung von Polymerlatices, die bevorzugt eine mittlere Partikelgröße im Mikrometer- und Nanometerbereich aufweisen, erhalten wird. Ebenfalls ist bevorzugt, dass der Schritt (a) in einem Extruder erfolgt.

In einer anderen bevorzugten Ausführungsform des erfindungsgemäßen Verfahrens ist in Schritt (b) das Treibmittel ausgewählt aus $CO_2$, und anderen Treibmittel, die unter hohem Druck mit dem Weichmacher vollständig mischbar sind, insbesondere kurzkettige Alkane wie Methan, Ethan und Propan. Das Gel wird vorzugsweise von dem Treibmittel mit einem Druck von 10 bis 300 bar, besonders bevorzugt 50 bis 200 bar kontaktiert.

In einer weiteren bevorzugten Ausführungsform erfolgt das Absenken des Drucks in Schritt (c) innerhalb einer Zeit in einem Bereich von 0,1 s bis 60 s, wobei sich das Polymermaterial abkühlt und verfestigt.

Das erhaltene mikro- oder nanoporöse Polymermaterial weist vorzugsweise eine Dichte von 0,5% bis 50% der Dichte des polymeren Ausgangsmaterials und/oder eine mittlere Porengröße von 0,01 bis 10 $\mu$m auf.

Das erfindungsgemäße NF-GAFFEL Verfahren konnte beispielsweise bereits im Batch-Prozess erfolgreich durchgeführt werden für Copolymere wie PMMA/Vernetzer, PS/Vernetzer und PVC/Vernetzer. Wichtig für eine erfolgreiche Darstellung von nanoporösen Polymermaterialien nach dem beschriebenen Verfahren ist die Herstellung eines zusammenhängenden Polymergels.

Vorzugsweise wird das erfindungsgemäße Verfahren als Batchverfahren und nicht als kontinuierliches Verfahren ausgeführt.

Vorzugsweise werden die Parameter Druck und Temperatur über der binären Mischungslücke des Weichmachers und des Treibmittels gewählt und besonders bevorzugt wird eine ausreichende Zeit temperiert (abhängig von der Probendicke oder des Probenvolumens), damit nach der Expansion stets Schäume mit Porendurchmessern im unteren Mikrometer- oder Nanometerbereich erhalten werden.

Speziell gewünschte Eigenschaft wie beispielsweise geringe Dichten, kleine Poren, offen-/ geschlossen porige Schaumstruktur etc. lassen sich durch Variation folgender Parameter erzielen, welche in drei Herstellungsprozesse eingeteilt werden können:

    1. Herstellung der Polymere: Bei der Herstellung der Polymere sind folgende Parameter besonders bevorzugt wichtig für das fertige Produkt:

- Vernetzer, Regler und Copolymer sowie deren Konzentrationen

- Art des Radikalstarters und die eingesetzte Menge

- Temperatur und Dauer der Polymerisationsreaktion

- Homogenisierung während der Polymerisation

- Nachbehandlung des Polymers (Reinigung, Extrusion, Tempern etc.)

2. Herstellung der Polymergele: Bei der Herstellung der Polymergle sind folgende Parameter besonders bevorzugt wichtig für das fertige Produkt:

- Weichmacher sowie das Verhältnis zwischen festem Polymer und Weichmacher

- Einwirkzeit des Weichmachers in das Polymergel

- gesättigtes Polymergel oder definierte Konzentration an Weichmacher

3. Herstellung der Polymerschäume: hier sind folgende Parameter besonders bevorzugt wichtig:

- Art des Treibmittels

- Druck, Temperatur, Zeit

- Expansionsgeschwindigkeit

Die folgenden Parameter werden vorzugsweise für die genaue Zusammensetzung der Polymergele benötigt.

Der Massenbruch des verwendeten Radikalstarters bezieht sich auf die gesamte Masse der Probe.

$$\sigma = \frac{m_{Starter}}{\sum_i^j m_i}.$$

Der Massenbruch des Weichmachers in einer Weichmacher / Polymer Mischung ist folgendermaßen definiert

$$\lambda = \frac{m_{Gelbildner}}{m_{Gelbildner} + m_{Polymer}}.$$

Für eine genaue Zusammensetzung des Polymers werden die Konzentrationen aller Additive wie beispielsweise Vernetzer und Regler Stoffmengenbezogen folgendermaßen angegeben:

Das Stoffmengenverhältnis eines Vernetzers in einer Vernetzer / Monomer Mischung ist gegeben durch

$$\nu = \frac{n_{Vernetzer}}{n_{Vernetzer} + n_{Monomer}} \cdot 100.$$

Das Stoffmengenverhältnis weiterer Additive wie beispielsweise eines Reglers in einer Additiv / Monomer-Vernetzer Mischung ist definiert durch:

$$\rho = \frac{n_{Additiv}}{\sum_i^j n_i} \cdot 100.$$

Das Polymergel wird vorzugsweise in zeitökonomischen Schritten, abhängig von der Konfektionsform, erhalten. So ist für dünne Filme in der Größenordnung von 1 Mikrometer vorzugsweise eine direkte Kontaktierung mit dem Weichmacher zielführend. Bulkmaterialien erfordern vorzugsweise entweder Polymerlatexpulver, die kompaktiert und dann mit dem Weichmacher getränkt werden, oder Polymergranulate, die durch verschiedene Prozesse wie Mahlen oder Gefriertrocknung erhalten werden. Bevorzugt werden die Polymerausgangsmaterialien, deren eine Dimension, Länge, Breite oder Höhe, von der Größenordnung Mikrometer ist, um ein schnelles Quellen zu erzielen.

Nach Bereitstellung der benötigten Polymergele kann der gewünschte Schaum nach dem erfindungsgemäßen Verfahren (NF-GAFFEL) hergestellt werden. Für eine großtechnische Umsetzung des Schäumvorgangs ist sowohl ein Batchprozess als auch ein kontinuierliches Verfahren möglich. Besonders bevorzugt ist für Schritte b) und/oder c) ein Batchprozess.

1. Die Herstellung der Schäume in einem Batchprozess kann in Anlehnung der Beispiele 1 bis 5 durchgeführt werden. Hierzu muss der Maßstab der druckfesten Apparatur vorzugsweise auf die gewünschte Schaummenge angepasst werden und die bereits erörterten Parameter wie beispielsweise Druck, Temperatur und Verweildauer des Polymergels in der Treibmittelatmosphäre beibehalten werden. Mögliche druckfeste Apparaturen sind vorzugsweise Autoklaven, welche die benötigten Prozessparameter standhalten und bereits in industriellen Prozessen verwendet werden. Die Polymergele können so vorzugsweise in einem geschlossenen Behälter mit dem komprimierten Treibmittel kontaktiert werden und nach ausreichender Temperierung zu einem festen Nanoschaum expandiert werden.

2. Die Herstellung der Schäume in einem kontinuierlichen Prozess ließe sich beispielsweise in einem Extruder realisieren. Durch den Einsatz der Polymergele, die bereits bei Raumtemperatur leicht verformbar sind, könnten diese vorzugsweise ohne Temperatureintrag in einem Extruder kontinuierlich gefördert und durch Zugabe des Treibmittels nach dem erfindungsgemäßen Verfahren (NF-GAFFEL) geschäumt werden. Bei diesem Prozess wird vorzugsweise Energie in Form von Scherung in das System eingebracht, welche für eine ständige Oberflächenvergrößerung des Polymergels sorgt. Hierbei wird die Bildung der homogenen Mischung aus Treibmittel und Weichmacher im Polymergel vorzugsweise beschleunigt und reduziert somit die Kontaktierdauer zwischen Treibmittel und Polymergel. Die benötigten Parameter Druck, Temperatur lassen sich vorzugsweise in großtechnischen Extrudern ohne weiteres einstellen, vorausgesetzt der Extruder weist eine ausreichende Gasdichtigkeit auf. Die Kontaktierdauer zwischen dem Treibmittel und dem Polymergel kann vorzugsweise durch die Länge des Extrusionskanals sowie durch die Schneckengeschwindigkeit variiert werden. Am Ende des Extruders kann vorzugsweise durch Öffnen eines Ventils, das mit Treibmittel gefüllte Polymergel, zu einem festen Nanoschaum expandiert werden. Hierbei ist vorzugsweise ein Druckgradient, der eine langsame Expansion ($t_{exp} \approx 20$ s) hervorbringt von Vorteil (s. Beispiel 2.4).

Die Erfindung wird anhand der nachfolgenden, nicht einschränkenden Beispiele näher erläutert.

Beispiele

Beispiel 1: Poly-Methylmethacrylat (PMMA) Nanoschäume

Beispiel 1.1: Herstellung eines PMMA Nanoschaums nach dem NF-GAFFEL Verfahren.

Hierzu wurde eine Probe herkömmlichen Plexiglases mit Aceton zu einem PMMA-Gel versetzt und im Anschluss mit $CO_2$ geschäumt. Die Expansionsdauer $t_{exp}$ vom Ausgangsdruck $p$ = 250 bar auf Normaldruck 1 bar betrug ca. 1 Sekunde. Das Massenverhältnis von PMMA zu Aceton im Polymergel war 1:3 ($\lambda_{Aceton}$ = 0,75). Das Gel wurde in einer Hochdruckzelle bei $p$ = 250 bar, $T$ = 55 °C und $t$ = 15 min mit $CO_2$ kontaktiert und im Anschluss expandiert. Figur 1 zeigt die Schaumstruktur in 2 unterschiedlichen Vergrößerungen.

Zusammensetzung des Gels / Schaums betrug: $\sigma$ = unbekannt, $\lambda_{Aceton}$ = 0,75, n = unbekannt, $\rho$ = unbekannt

Beispiel 1.2: Herstellung eines PMMA Nanoschaums nach dem NF-GAFFEL Verfahren.

Hierzu wurde das PMMA bestehend aus dem Monomer Methylmethacrylat (MMA) und dem Vernetzer N,N'-Methylenbisacrylamid (MBAA) mittels Radikalstarter Azoisobutyronitril (AIBN) bei $T$ = 95 °C und einer Dauer von 2 h polymerisiert. In Beispiel 1.2 werden die Unterschiede zweier unterschiedlicher Vernetzerkonzentrationen auf die erhaltene Schaumstruktur gezeigt. Es wurde ein mit Aceton gesättigtes Polymer erzeugt und wie in Beispiel 1 bei $p$ = 250 bar, $T$ = 55 °C und $t$ = 15 min mit $CO_2$ kontaktiert und aufgeschäumt. Dieses Beispiel zeigt die Erfolgreiche Anwendung des NF-GAFFEL Verfahrens anhand einer PMMA-Probe genau bekannter Zusammensetzung.

Figur 2 links zeigt den Einfluss auf die entstehende Schaumstruktur bei einem Vernetzeranteil von $v$ = 0,2 mol% und Fig. 2 rechts zeigt eine deutlich kleinere Schaumstruktur durch den Einfluss von v = 0,7 mol% Vernetzer.

Zusammensetzung des Gels / Schaums betrug: $\sigma_{AIBN}$ = 0,004, $\lambda_{Aceton}$ = gesättigt, $\nu_{MBAA}$ = 0,20 mol% (links) / 0,70 mol% (rechts)

Beispiel 1.3: Herstellung eines PMMA Nanoschaums nach dem NF-GAFFEL Verfahren.

Hierzu wurde wie in Beispiel 1.2 das PMMA bestehend aus dem Monomer Methylmethacrylat (MMA) und dem Vernetzer N,N'-Methylenbisacrylamid (MBAA) mittels Radikalstarter Azoisobutyronitril (AIBN) bei $T$ = 95 °C und einer Dauer von 2 h polymerisiert. In Beispiel 1.3 wird der Einfluss der Schäumtemperatur auf die Schaumstruktur gezeigt. Hierzu wurde das PMMA-Gel wie in Beispiel 2 hergestellt und bei $p$ = 250 bar, $t$ = 15 min mit $CO_2$ kontaktiert und geschäumt. Variiert wurde die Temperatur der Kontaktierung mit $CO_2$ und somit ebenfalls die Expansionstemperatur. Figur 3 links zeigt die entstehende Schaumstruktur bei $T$ = 35 °C, in der Mitte betrug die Temperatur $T$ = 55 °C und im rechten Bild waren es $T$ = 75 °C.

Zusammensetzung des Gels / Schaums betrug: $\sigma_{AIBN}$ = 0,004, $\lambda_{Aceton}$ = gesättigt, $\nu_{MBAA}$ 0,70 mol%

Beispiel 1.4: Herstellung eines PMMA Nanoschaums nach dem NF-GAFFEL Verfahren.

Hierzu wurde das PMMA wie in den Beispielen 2 und 3 bestehend aus dem Monomer Methylmethacrylat (MMA) und dem Vernetzer N,N'-Methylenbisacrylamid (MBAA) mittels Radikalstarter Azoisobutyronitril (AIBN) bei $T$ = 95 °C und einer Dauer von 2 h polymerisiert. In Beispiel 4 wird der Einfluss der Verweildauer der Gele in der $CO_2$ Atmosphäre auf die Schaumstruktur gezeigt. Hierzu wurde das PMMA-Gel wie in Beispiel 2 hergestellt und ausgehend von $p$ = 250 bar geschäumt. Die Vernetzerkonzentration betrug v = 0,7 mol% und die Schäumtemperatur war bei allen Experimenten $T$ = 55 °C.

In Figur 4 sind die Ergebnisse von drei Schäumexperimente gezeigt, die sich in der Dauer, die das Gel der $CO_2$ Atmosphäre ausgesetzt waren, unterscheiden.

Der linke Schaum wurde nach einer Sättigungszeit von $t$ = 5 min erhalten, der Mittlere nach $t$ = 15 min und der Rechte nach $t$ = 60 min.

Zusammensetzung des Gels / Schaums betrug: $\sigma_{AIBN}$ = 0,004, $\lambda_{Aceton}$ = gesättigt, $\nu_{MBAA}$ = 0,70 mol%

Beispiel 1.5: Herstellung eines PMMA Nanoschaums nach dem NF-GAFFEL Verfahren.

Hierzu wurde das PMMA bestehend aus dem Monomer Methylmethacrylat (MMA), dem Vernetzer N,N'-Methylenbisacrylamid (MBAA) und dem Regler 2-Ethylhexylthioglycolat (EHTG) mittels Radikalstarter Azoisobutyronitril (AIBN) bei $T$ = 95 °C und einer Dauer von 2 h polymerisiert. In Beispiel 5 wird der Einfluss des Reglers auf die Schaumstruktur zweier Polymere unterschiedlicher Vernetzerkonzentrationen gezeigt. Hierzu wurden die Polymere mit Aceton gesättigt und wie in den vorrangegangenen Beispielen bei $p$ = 250 bar, $T$ = 55 °C und $t$ = 15 min mit $CO_2$ kontaktiert und aufgeschäumt. Die Regler Konzentration war bei beiden Schäumen mit $\rho$ = 0,50 mol% gleich.

Figur 5 links zeigt den Einfluss auf die entstehende Schaumstruktur bei einer Vernetzerkonzentration von $v$ = 0,7 mol% und Figur 5 rechts zeigt den Einfluss bei $v$ = 1,20 mol% Vernetzer. Mit Hilfe des Reglers (EHTG) können die Eigenschaften der Poren des Schaumes enorm beeinflusst werden. Es lassen sich problemlos monodisperse, geschlossenzellige Schäume mit Porengrößen im unteren Mikrometer Bereich herstellen (links) und Schäume mit Regionen unterschiedlicher Porendurchmesser (rechts). Hiermit könnten Schäume hergestellt werden, die in sich Regionen mit unterschiedlichen Eigenschaften hervorbringen.

Zusammensetzung des Gels / Schaums betrug: $\sigma_{AIBN}$ = 0,004, $\lambda_{Aceton}$ = gesättigt, $\nu_{MBAA}$ = 0,70 mol% (links) / 1,20 mol% (rechts), $\rho_{EHTG}$ = 0,50 mol%

Beispiel 2: Polystyrol (PS) Nanoschäume

Beispiel 2.1: Herstellung von PS Nanoschäumen nach dem NF-GAFFEL Verfahren unterschiedlicher Porengrößen.

Hierzu wurde das PS bestehend aus dem Monomer Styrol und dem Vernetzer Divinylbenzol (DVB) mittels Radikalstarter Azoisobutyronitril (AIBN) bei $T$ = 90 °C und einer Dauer von 2 h polymerisiert.

Das PS wurde mit der gleichen Masse an Aceton ($\lambda_{Aceton}$ = 0,50) zu einem PS-Gel umgesetzt und in einer Hochdruckzelle bei $p$ = 250 bar, $T$ = 55 °C und $t$ = 15 min mit $CO_2$ kontaktiert und im Anschluss expandiert. Figur 6 zeigt die Schaumstruktur zweier Proben unterschiedlicher Vernetzerkonzentrationen. Die linke Probe enthält eine Vernetzerkonzentration von $v$ = 0,5 mol% und die rechte Probe von $v$ = 1 mol%.

Zusammensetzung des Gels / Schaums betrug: $\sigma_{AIBN}$ = 0,004, $\lambda_{Aceton}$ = gesättigt, $\nu_{DVB}$ = 0,5 mol% (links) / 1,00 mol% (rechts)

Beispiel 2.2: Herstellung von PS Nanoschäumen nach dem NF-GAFFEL Verfahren.

Hierzu wurde wie in Beispiel 2.1 PS-Gele hergestellt und bei $p$ = 250 bar, $T$ = 55 °C, $t$ = 15 min mit $CO_2$ versetzt und im Anschluss expandiert. Die Konzentration an Vernetzer (DVB) betrug $v$ = 1 mol%. Die drei Schäumexperimente wurden bei unterschiedlichen Temperaturen durchgeführt. Figur 7 linker Schaum wurde bei einer Temperatur von $T$ = 35 °C erhalten, mittlerer Schaum bei $T$ = 65 °C und der Rechte bei $T$ = 75 °C.

Zusammensetzung des Gels / Schaums betrug: $\sigma_{AIBN}$ = 0,004, $\lambda_{Aceton}$ = 0,50, $\nu_{DVB}$ = 1,00 mol%

Beispiel 2.3: Herstellung von PS Nanoschäumen nach dem NF-GAFFEL Verfahren.

Hierzu wurde wie in Beispiel 2.1 PS-Gele hergestellt und im Anschluss mit unterschiedlichen $CO_2$ Drücken kontaktiert und bei $T$ = 65 °C nach $t$ = 15 min geschäumt. Die Konzentration an Vernetzer (DVB) betrug $v$ = 1 mol%. In Figur 8 zeigt der linke Schaum das Ergebnis bei einem $CO_2$ Druck von $p$ = 250 bar und der rechte Schaum wurde erhalten bei einem $CO_2$ Druck von $p$ = 150 bar.

Bei beiden Experimenten sind die Parameter so gewählt, dass diese über der binären Mischungslücke zwischen $CO_2$ und Aceton liegen.

Zusammensetzung des Gels / Schaums betrug: $\sigma_{AIBN}$ = 0,004, $\lambda_{Aceton}$ = 0,50, $\nu_{DVB}$ = 1,00 mol%

Beispiel 2.4: Herstellung von PS Nanoschäumen nach dem NF-GAFFEL Verfahren.

Hierzu wurde wie in Beispiel 2.1 PS-Gele hergestellt und bei $p$ = 250 bar, $T$ = 60 °C, $t$ = 15 min mit $CO_2$ kontaktiert und im Anschluss expandiert. Die Konzentration an Vernetzer (DVB) betrug $v$ = 2 mol%. Der entscheidende Unterschied zu allen vorangegangen Schäumexperimenten war die Dauer des Expansionsvorganges von 250 auf 1 bar. Figur 9 zeigt den erhaltenen Schaum bei einer Expansionsdauer von $t_{exp} \approx$ 20 s.

Zusammensetzung des Gels / Schaums betrug: $\sigma_{AIBN}$ = 0,004, $\lambda_{Aceton}$ = 0,50, $\nu_{DVB}$ = 2,00 mol%

Beispiel 3: Polyvinylchlorid (PVC) Nanoschäume; Herstellung eines PVC Nanoschaums nach dem NF-GAFFEL Verfahren.

Hierzu wurde eine Probe herkömmlichen PVC-Polymers mit Aceton zu einem gesättigten PVC-Gel umgesetzt und im Anschluss mit $CO_2$ geschäumt. Das Gel wurde in einer Hochdruckzelle bei $p$ = 250 bar, $T$ = 70 °C und $t$ = 10 min mit $CO_2$ versetzt und im Anschluss expandiert. Figur 10 zeigt die Schaumstruktur in 2 unterschiedlichen Vergrößerungen.

Zusammensetzung des Gels / Schaums betrug: σ = unbekannt, $\lambda_{Aceton}$ = gesättigt, ν = unbekannt, ρ = unbekannt

Beispiel 4: Polyethylen (PE) Nanoschäume: Herstellung eines PE Nanoschaums nach dem NF-GAFFEL Verfahren.

Hierzu wurde eine Probe herkömmlichen PE-Polymers mit Cyclohexan bei 60 °C zu einem gesättigten PE-Gel umgesetzt und im Anschluss mit $CO_2$ geschäumt. Das Gel wurde in einer Hochdruckzelle bei $p$ = 250 bar, $T$ = 70 °C und $t$ = 15 min mit $CO_2$ versetzt und im Anschluss expandiert. Figur 11 zeigt die Schaumstruktur in 2 unterschiedlichen Vergrößerungen.

Zusammensetzung des Gels / Schaums betrug: σ = unbekannt, $\lambda_{Cyclohexan}$ = gesättigt, ν = unbekannt, ρ = unbekannt

Beispiel 5: Herstellung von 10 g nanoporösen Polystyrolpartikeln

Hierzu wurden 10 g vernetzte Polystyrolpartikel (mittlerer Durchmesser ≈ 1 mm, 1 mol% DVB als Vernetzer) mit 20 g Aceton in einem geschlossenen Gefäß für 180 Minuten bei Raumtemperatur und Normaldruck kontaktiert. Anhand der unterschiedlichen Brechungsindizes vom Polymer und dem Polymergel konnte optisch verfolgt werden, wann die Polystyrolpartikel vollständig zum Polymergel gequollen waren. Die Polystyrolgelpartikel waren formstabil und wiesen eine kugelförmige Gestalt auf, waren aber im Vergleich zum Ausgangspolymer durch leichte mechanische Einwirkung verformbar. Dann wurden die gequollenen Polystyrolpartikel für 90 Minuten bei 200 bar und 70 °C in eine $CO_2$ Atmosphäre gebracht. Durch Druckentspannung bildeten sich nanoporöse Polystyrolpartikel mit einem mittleren Durchmesser von 2 mm mit einer Dichte < 0,30 g/cm$^3$ und einem mittleren Durchmesser der Nanoporen von < 500 nm (s. Figur 12).

Beispiel 6: Bestimmung der Struktur der nanoporösen Materialien

Um die Struktur der erzeugten nanoporösen Materialien abzubilden wurde zunächst eine frische Bruchkante erzeugt. Anschließend wurde die Probe, mit der Bruchkante nach oben zeigend, auf dem Probenteller fixiert. Damit die bei der Messung entstehende Aufladung abgeleitet werden konnte, wurde zur Fixierung Silberleitlack verwendet. Bevor die Aufnahmen durchgeführt werden konnten, wurde die Probe mit Gold beschichtet, damit es nicht zu lokalen Aufladungseffekten kam. Hierzu wurde die Beschichtungsanlage K950X mit dem Sputterzusatz K350 der Firma EMITECH verwendet. In allen Fällen erfolgte die Goldbesputterung bei einem Argondruck von ca. 10$^{-2}$ mbar, wobei stets für 30 Sekunden ein Strom von 30 mA angelegt wurde. Die Schichtdicke der auf diese Weise aufgetragenen Goldschicht betrug in etwa zwischen 5 und 15 nm. Die elektronenmikroskopischen Aufnahmen wurden an einem Gerät des Typs SUPRA 40 VP der Firma ZEISS durchgeführt. Bei diesem Gerät sind Beschleunigungsspannungen von bis zu 30 kV und eine maximale Auflösung von 1,3 nm möglich. Die Aufnahmen wurden bei einer Beschleunigungsspannung von 5 kV mit dem InLens-Detektor aufgezeichnet. Zur Bestimmung des mittleren Porendurchmessers und der mittleren Stegdicke der nano- und mikroporösen Schäume wurde ein mit dem beschriebenen Rasterelektronenmikroskop aufgenommenes Bild gewählt und mit dem Computerprogramm Datinf Measure wenigstens 300 Poren bzw. Stege ausgemessen um eine ausreichend gute Statistik zu gewährleisten. Da auf jeder rasterelektronischen Aufnahme nur eine begrenzte Anzahl an Poren und Stegen vorhanden ist, werden mehrere rasterelektronenmikroskopische Aufnahmen zur Bestimmung der mittleren Durchmesser der Poren und Stege herangezogen. Hierbei ist darauf zu achten, dass die Vergrößerung des Bildes so gewählt wurde, dass der Fehler beim Bestimmen der Längen möglichst klein bleibt. Ein Beispiel ist im Anhang in Figur 13 dargestellt. Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

Patentansprüche

1. Verfahren zur Herstellung von mikro- und nanoporösem Polymermaterial, wobei

(a) bei vorgegebener Temperatur das polymere Ausgangsmaterial mit einem Weichmacher gequollen wird, wobei es in einen viskoelastischen, deformierbaren Zustand übergeht,
(b) anschließend das gequollene Polymer mit einem Treibmittel unter hohem Druck kontaktiert wird, und
c) der Druck abgesenkt wird, wobei sich das mikro- und nanoporöse Polymermaterial verfestigt,

wobei das mikro- und nanoporöse Polymermaterial eine mittlere Porengröße in einem Bereich von 0,01 bis 10 μm und eine Dichte in einem Bereich von 10 bis 300 kg/m$^3$ aufweist, und wobei der arithmetische Mittelwert der Dicke der Stege zwischen den Poren in einem Bereich von 5 bis 50 nm liegt bestimmt wie beschrieben in Beispiel 6 der Beschreibung, wobei die Parameter Druck und Temperatur über der binären Mischungslücke des Weichmachers und des Treibmittels gewählt werden, und wobei das poröse Material durch Expansion von Polymergelen hergestellt wird, wobei das entweichende Treibmittel den Weichmacher extrahiert.

**2.** Verfahren nach Anspruch 1, wobei

(i) das polymere Ausgangsmaterial aus einem oder mehreren, insbesondere thermoplastischen, Polymeren, bevorzugt aus einem Polymer der Gruppe Polymethylmethacrylat (PMMA), Polystyrol (PS), Polyvinylchlorid (PVC), Polylactid (PL), Polyethylen (PE), Polypropylen (PP), Polycarbonat (PC) und Cellophan besteht; und/oder
(ii) der Weichmacher bevorzugt ausgewählt ist aus Aceton und anderen polaren aprotischen Lösungsmitteln und kurzkettigen Alkanen, ganz besonders bevorzugt Aceton ist; und/oder
(iii) das Massenverhältnis von polymerem Ausgangsmaterial zu Weichmacher von 10:0,5 bis 1:3, vorzugsweise 10:2 bis 1:1 beträgt; und/oder
(iv) die Zeit des Quellens 0,1 s bis 100 h, vorzugsweise 1 s bis 1 h beträgt.

**3.** Verfahren nach Anspruch 1 oder 2, wobei Schritt (b) bei einer vorgegebenen Temperatur erfolgt, wobei die vorgegebene Temperatur in Schritt (a) und (b) unabhängig voneinander in einem Bereich von 0 bis 100 °C liegt.

**4.** Verfahren nach einem oder mehreren der Ansprüche 1 bis 3, wobei durch das Quellen in Schritt (a) eine dichte Packung von Polymerlatices, die bevorzugt eine mittlere Partikelgröße im Mikrometer- und Nanometerbereich aufweisen, erhalten wird.

**5.** Verfahren nach einem oder mehreren der Ansprüche 1 bis 4, wobei der Schritt (a) in einem Extruder erfolgt.

**6.** Verfahren nach einem oder mehreren der Ansprüche 1 bis 5, wobei in Schritt (b)

(i) das Treibmittel ausgewählt ist aus $CO_2$ und anderen Treibmitteln, die unter hohem Druck mit dem Weichmacher vollständig mischbar sind, insbesondere kurzkettigen Alkanen wie Methan, Ethan, Propan; und/oder
(ii) mit einem Druck in einem Bereich von 10 bis 300 bar, vorzugsweise in einem Bereich von 50 bis 200 bar kontaktiert wird.

**7.** Verfahren nach einem oder mehreren der Ansprüche 1 bis 6, wobei das Absenken des Drucks in Schritt (c) innerhalb von 0,1 s bis 60 s erfolgt, wobei sich das Polymermaterial abkühlt und verfestigt.

**8.** Verfahren nach einem oder mehreren der Ansprüche 1 bis 7, wobei das erhaltene mikro- und nanoporöse Polymermaterial eine Dichte von 0,5% bis 50% der Dichte des polymeren Ausgangsmaterials aufweist.

**9.** Mikro- oder nanoporöses Polymermaterial, wobei das mikro- oder nanoporöse Polymermaterial eine mittlere Porengröße in einem Bereich von 0,01 bis 10 µm und eine Dichte in einem Bereich von 10 bis 300 kg/m$^3$ aufweist, und wobei der arithmetische Mittelwert der Dicke der Stege zwischen den Poren in einem Bereich von 5 bis 50 nm liegt - bestimmt wie beschrieben in Beispiel 6 der Beschreibung, wobei das Polymermaterial nach dem Verfahren gemäß einem der Ansprüche 1 bis 8 hergestellt werden kann.

**10.** Mikro- oder nanoporöses Polymermaterial gemäß Anspruch 9, **dadurch gekennzeichnet, dass** das Polymermaterial und/oder das Ausgangsmaterial teilvernetzt ist.

**11.** Mikro- oder nanoporöses Polymermaterial gemäß einem der Ansprüche 9 oder 10, **dadurch gekennzeichnet, dass** der arithmetische Mittelwert der Dicke der Stege zwischen den Poren in einem Bereich von 10 bis 35 nm liegt.

**12.** Mikro- oder nanoporöses Polymermaterial gemäß einem der Ansprüche 9 bis 11, **dadurch gekennzeichnet, dass** das mikro- oder nanoporöse Polymermaterial nicht in dem eigenen Monomer löslich ist.

**13.** Mikro- oder nanoporöses Polymermaterial gemäß einem der Ansprüche 9 bis 12, **dadurch gekennzeichnet, dass** das mikro- oder nanoporöse Polymermaterial teilweise geschlossenzellig ist.

**14.** Formkörper aus einem mikro- oder nanoporösen Material gemäß einem der Ansprüche 9 bis 13.

**15.** Formkörper gemäß Anspruch 14, **dadurch gekennzeichnet, dass** der Formkörper versiegelt ist.


**Claims**

**1.** A method for the production of a micro- and nanoporous polymer material, wherein

(a) the polymer starting material is swollen with a plasticiser at a specified temperature whereby it changes into a visco-elastic deformable state,
(b) subsequently the swollen polymer is contacted with a foaming agent under high pressure, and
c) the pressure is lowered whereby the micro- and nanoporous polymer material solidifies,

wherein the micro- and nanoporous polymer material has a mean pore size in range from 0.01 to 10 µm and a density in a range from 10 to 300 kg/m$^3$

and wherein the arithmetic mean of the thickness of the webs between the pores is in a range from 5 to 50 nm, determined as described in example 6 of the specification, wherein the parameters of pressure and temperature are selected to be above the binary miscibility gap of the plasticiser and the foaming agent and wherein the porous material is produced by the expansion of polymer gels, wherein the escaping foaming agent extracts the plasticiser.

2. The method according to claim 1, wherein

(i) the polymer starting material consists of one or several particularly thermoplastic polymers, preferably a polymer of the group of polymethyl methacrylate (PMMA), polystyrene (PS), polyvinyl chloride (PVC), polylactide (PL), polyethylene (PE), polypropylene (PP), polycarbonate (PC) and cellophane; and/or
(ii) the plasticiser is preferably selected from acetone and other polar aprotic solvents and short chain alkanes, very particularly preferably is acetone; and/or
(iii) the mass ratio of polymer starting material to plasticiser is from 10:0.5 to 1:3, preferably from 10:2 to 1:1; and/or
(iv) the swelling time is from 0.1 s to 100 s, preferably from 1 s to 1 h.

3. The method according to claim 1 or 2, wherein step (b) is performed at a specified temperature, wherein the specified temperature in steps (a) and (b), independently of one another, is in a range from 0 to 100°C.

4. The method according to one or several of claims 1 to 3, wherein the swelling in step (a) results in a dense packing of polymer latices preferably having a mean particle size in the micrometre and nanometre ranges.

5. The method according to one or several of claims 1 to 4, wherein step (a) is carried out in an extruder.

6. The method according to one or several of claims 1 to 5, wherein in step (b)

(i) the foaming agent is selected from $CO_2$ and other foaming agents that are completely miscible with the plasticiser under high pressure, in particular short chain alkanes such as methane, ethane, propane; and/or
(ii) contacting is effected in a range from 10 to 300 bar, preferably in a range from 50 to 200 bar.

7. The method according to one or several of claims 1 and 6 wherein the pressure lowering in step (c) takes place within 0.1 s to 60 s in which the polymer material cools and solidifies.

8. The method according to one or several of claims 1 to 7 wherein the obtained micro- and nanoporous polymer material has a density from 0.5% to 50% of the density of the polymer starting material.

9. A micro- or nanoporous polymer material wherein the micro- or nanoporous polymer material has a mean pore size in range from 0.01 to 10 $\mu$m and a density in a range from 10 to 300 kg/m$^3$ and wherein the arithmetic mean of the thickness of the webs between the pores is in a range from 5 to 50 nm, determined as described in example 6 of the specification, wherein the polymer material can be produced by the method according to any one of claims 1 to 8.

10. The micro- or nanoporous polymer material according to claim 9, **characterised in that** the polymer material and/or the starting material are partially crosslinked.

11. The micro- or nanoporous polymer material according to any one of claims 9 to 10, **characterised in that** the arithmetic mean of the thickness of the webs between the pores is in a range from 10 to 35 nm.

12. The micro- or nanoporous polymer material according to any one of claims 9 to 11, **characterised in that** the micro- or nanoporous polymer material is not soluble in its own monomer.

13. The micro- or nanoporous polymer material according to any one of claims 9 to 12, **characterised in that** the micro- or nanoporous polymer material is partially closed-cell.

14. A moulded body made of a micro- or nanoporous material according to any one of claims 9 to 13.

15. The moulded body according to claim 14, **characterised in that** the moulded body is sealed.

**Revendications**

1. Procédé de préparation d'un matériau polymère micro- et nanoporeux, dans lequel

(a) à une température donnée, le matériau de départ polymère est gonflé avec un plastifiant, ce qui le fait passer à un état déformable viscoélastique,
(b) puis le polymère gonflé est mis en contact avec un agent gonflant sous une pression élevée, et
(c) la pression est réduite, le matériau polymère micro- et nanoporeux se solidifiant,

dans lequel le matériau polymère micro- et nanoporeux présente une taille de pore moyenne dans une plage de 0,01 à 10 μm et une densité dans une plage de 10 à 300 kg/m³, et dans lequel la moyenne arithmétique de l'épaisseur des séparations entre les pores se trouve dans une plage de 5 à 50 nm, déterminée comme décrit dans l'exemple 6 de la description,

dans lequel les paramètres de pression et de température sont choisis via la lacune de miscibilité binaire du plastifiant et de l'agent gonflant,

et dans lequel le matériau poreux est fabriqué en dilatant des gels de polymère, dans lequel l'agent gonflant qui fuit extrait le plastifiant.

2. Procédé selon la revendication 1, dans lequel

(i) le matériau de départ polymère est constitué d'un ou plusieurs polymères, notamment thermoplastiques, de préférence d'un polymère du groupe comprenant polyméthacrylate de méthyle (PMMA), polystyrène (PS), chlorure de polyvinyle (PVC), polylactide (PL), polyéthylène (PE), polypropylène (PP), polycarbonate (PC) et cellophane ; et/ou
(ii) le plastifiant est de préférence choisi parmi l'acétone et d'autres solvants polaires aprotiques et des alcanes à chaîne courte, de manière particulièrement préférée est l'acétone ; et/ou
(iii) le rapport massique du matériau de départ polymère au plastifiant est de 10 : 0,5 à 1 : 3, de préférence de 10 : 2 à 1 : 1 ; et/ou
(iv) le temps de gonflement est de 0,1 s à 100 h, de préférence de 1 s à 1 h.

3. Procédé selon la revendication 1 ou 2, dans lequel l'étape (b) a lieu à une température prédéterminée, les températures prédéterminées dans les étapes (a) et (b) se trouvant indépendamment l'une de l'autre dans une plage de 0 à 100°C.

4. Procédé selon une ou plusieurs des revendications 1 à 3, dans lequel le gonflement à l'étape (a) conduit à un compactage serré de latex polymères, qui ont de préférence une taille de particule moyenne dans la plage micrométrique et nanométrique.

5. Procédé selon une ou plusieurs des revendications 1 à 4, dans lequel l'étape (a) a lieu dans une extrudeuse.

6. Procédé selon une ou plusieurs des revendications 1 à 5, dans lequel à l'étape (b)

(i) l'agent gonflant est choisi parmi le $CO_2$ et d'autres agents gonflants qui sont complètement miscibles avec le plastifiant sous une pression élevée, en particulier les alcanes à chaîne courte tels que le méthane, l'éthane, le propane ; et/ou
(ii) est mis en contact avec une pression dans une plage de 10 à 300 bar, de préférence dans une plage de 50 à 200 bar.

7. Procédé selon une ou plusieurs des revendications 1 à 6, dans lequel l'abaissement de la pression à l'étape (c) a lieu en 0,1 s à 60 s, le matériau polymère refroidissant et se solidifiant.

8. Procédé selon une ou plusieurs des revendications 1 à 7, dans lequel le matériau polymère micro- et nanoporeux obtenu présente une densité de 0,5 % à 50 % de la densité du matériau polymère de départ.

9. Matériau polymère micro- ou nanoporeux, dans lequel le matériau polymère micro- et nanoporeux présente une taille de pore moyenne dans une plage de 0,01 à 10 μm et une densité dans une plage de 10 à 300 kg/m³, et dans lequel la moyenne arithmétique de l'épaisseur des séparations entre les pores se trouve dans une plage de 5 à 50 nm, déterminée comme décrit dans l'exemple 6 de la description, dans lequel le matériau polymère peut être préparé par le procédé selon l'une quelconque des revendications 1 à 8.

10. Matériau polymère micro- ou nanoporeux selon la revendication 9, **caractérisé en ce que** le matériau polymère et/ou le matériau de départ est partiellement réticulé.

11. Matériau polymère micro- ou nanoporeux selon l'une des revendications 9 ou 10, **caractérisé en ce que** la moyenne arithmétique de l'épaisseur des séparations entre les pores est comprise entre 10 et 35 nm.

12. Matériau polymère micro- ou nanoporeux selon l'une des revendications 9 à 11, **caractérisé en ce que** le matériau polymère micro- ou nanoporeux n'est pas soluble dans son propre monomère.

13. Matériau polymère micro- ou nanoporeux selon l'une des revendications 9 à 12, **caractérisé en ce que** le matériau polymère micro- matériau de départ polymère ou nanoporeux est à cellules partiellement fermées.

14. Corps moulé en matériau micro- ou nanoporeux selon l'une des revendications 9 à 13.

15. Corps moulé selon la revendication 14, **caractérisé en ce que** le corps moulé est scellé.

Fig. 1

Fig. 2

Fig. 3

Fig. 4

WD = 3.3 mm
EHT = 5.00 kV
20 µm

WD = 3.4 mm
EHT = 5.00 kV
20 µm

Fig. 5

Fig. 6

Fig. 7

Fig. 8

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0050151 A1
- EP 0258669 A2
- EP 0750006 A1
- JP S55127443 A
- JP S5867423 A
- CN 1318580
- US 7838108 B2
- EP 2185620 B1
- EP 1646687 B1

**In der Beschreibung aufgeführte Nicht-Patentliteratur**

- **S.S. KISTLER.** *Nature,* 1931, vol. 127, 1
- **J. S. COLTON ; N. P. SUH.** *Polymer Engineering and Science,* 1987, vol. 27, 485-492
- **J. S. COLTON ; N. P. SUH.** *Polymer Engineering and Science,* 1987, vol. 27, 493-499
- **J. S. COLTON ; N. P. SUH.** *Polymer Engineering and Science,* 1987, vol. 27, 500-503
- **D. F. BALDWIN et al.** *Polymer Engineering and Science,* 1996, vol. 36, 1437-1445
- **D. F. BALDWIN et al.** *Polymer Engineering and Science,* 1996, vol. 36, 1446-1453
- **B. KRAUSE et al.** *Macromolecules,* 2002, vol. 35, 1738-1745
- **B. KRAUSE et al.** *Macromolecules,* 2001, vol. 34, 8792-8801
- **S. MERLET et al.** *Macromolecules,* 2008, vol. 41, 4205-4215